# EUROPÄISCHE PATENTSCHRIFT

(11) **EP 1 109 869 B1**
(45) Veröffentlichungstag und Bekanntmachung des Hinweises auf die Patenterteilung: **23.04.2003**
(21) Anmeldenummer: 99940045.0
(22) Anmeldetag: 24.07.1999
(51) Int. Cl.: C09D 5/03, C09D 5/02

(54) **WÄSSRIGE PULVERKLARLACK-DISPERSION**
AQUEOUS POWDER LACQUER DISPERSION
DISPERSION AQUEUSE CONTENANT UN VERNIS CLAIR PULVERULENT

(30) Priorität: 04.08.1998 DE 19835206
(43) Veröffentlichungstag der Anmeldung: 27.06.2001
(73) Patentinhaber: BASF Coatings AG, 48165 Münster (DE)
(72) Erfinder: OTT, Günther, D-48167 Münster (DE); WOLTERING, Joachim, D-48159 Münster (DE); MEISENBURG, Uwe, D-47053 Duisburg (DE); BLUM, Rainer, D-67069 Ludwigshafen (DE); BENDIX, Maximilian, D-59302 Oelde (DE)
(74) Vertreter: Fitzner, Uwe, Dr.
(86) Internationale Anmeldenummer: EP9905304
(87) Internationale Veröffentlichungsnummer: WO00008107

(56) Entgegenhaltungen:
- WO-A1-93/25596
- WO-A1-96/32452
- WO-A1-97/25157
- US-A- 3 974 303
- US-A- 5 558 911

## Beschreibung

Die vorliegende Erfindung betrifft eine wäßrige Dispersion von UV-härtbaren Pulverlacken, die auf Substrate appliziert nach teilweiser oder vollständiger Verdampfung des Wassers und thermischer Verfilmung der Pulverpartikel durch energiereiche Strahlung, bevorzugt UV-Licht zu vernetzten Lackfilmen gehärtet werden. Sie sind besonders geeignet für Automobilkarosserien aus Metallblech und/oder Kunststoff mittels elektrostatisch unterstützter Hochrotation oder pneumatischer Applikation als Überzug für mit Wasserbasislack beschichtete Automobilkarosserien.

Für die Beschichtung von Automobilkarosserien werden heute vorzugsweise Flüssiglacke verwendet. Diese verursachen zahlreiche Umweltprobleme aufgrund ihres Lösemittelgehaltes. Dies gilt auch für die Fälle des Einsatzes von Wasserlacken.

Aus diesem Grund sind in den letzten Jahren vermehrte Anstrengungen unternommen worden, für die Beschichtung Pulverlacke zu verwenden. Die Ergebnisse sind jedoch bisher nicht zufriedenstellend, insbesondere sind zur Erzielung eines gleichmäßigen Aussehens erhöhte Schichtdicken erforderlich.

Weitere schwerwiegende Probleme von Pulverlacken zur thermischen Härtung ergeben sich aus der Forderung nach Blockfestigkeit bei Lagerung, Lagerbarkeit auch bei Sommertemperaturen. Um diese zu gewährleisten muß der Erweichungspunkt der Lackpulver hoch sein. Wegen des hohen Erweichungspunktes der Lacke setzt dann aber schon beim Aufschmelzen der Pulver auf dem Substrat die thermisch aktivierte Vernetzungsreaktion ein, noch bevor die Lackoberfläche einen optimalen Verlauf erreicht hat. Zur Lösung dieses Problems werden UV-härtbare Pulverlacke vorgeschlagen, bei denen eine Trennung des Aufschmelzvorgangs und der Vernetzung möglich ist. Die bisher bekannt gewordenen UV-Pulverlacke basieren alle auf acrylisch oder vinylisch ungesättigten Stoffen, die wegen der für die gute Blockfestigkeit erforderlichen hohen Aufschmelztemperatur auch schon vor der UV-Bestrahlung thermisch polymerisieren können. Um die Blockfestigkeit zu garantieren, müssen für die UV-Pulverlacke absolut lösemittelfreie Polymere als Bindemittel eingesetzt werden, deren Gewinnung wegen deren Neigung zur thermischen Polymerisation sehr problematisch ist. Ein weiteres Problem bei der Anwendung von Pulverlacken ist, daß sie auf vorhandenen, für Flüssiglacke ausgelegten Anlagen nicht verwendet werden können, wegen der abweichenden Applikationstechnolgie. Dies war der Anlaß Pulverlacke in Form wäßriger Dispersionen zu entwickeln, die sich mit Flüssiglacktechnologien verarbeiten lassen. Aus diesem Gebiet gibt es Veröffentlichungen, z. B. DE 196 13 547.8-43 und DE 195 18 392.4.

Aus der US-Patentschrift 4268542 ist beispielsweise ein Verfahren bekannt, bei dem eine Pulverlack-Slurry verwendet wird, die sich für die Beschichtung von Automobilen eignet. Hierbei wird zunächst eine herkömmliche Pulverschicht auf die Karosserie aufgetragen und als zweite Schicht die Klarlack-Slurry. Bei dieser Klarlack-Slurry auf Basis von Acrylatharzen werden ionische Verdicker verwendet, welche zu einer relativ hohen Empfindlichkeit der applizierten Lackschicht gegen Feuchtigkeit, insbesondere gegen Schwitzwasser, führen. Ferner weisen diese in einem der Beispiele einen Gehalt von 0,5 bis 30 % an glycidylhaltigen Monomeren auf. Zudem muß mit hohen Einbrenntemperaturen (über 160° C) gearbeitet werden.

Das allgemeine Problem der thermisch aktivierten Vernetzung beim Abdampfen des Wassers und Verschmelzen des resultierenden Pulverlackbelags ist mit dieser Technologie aber noch immer ungelöst, weil die Vernetzung nicht bei einer scharf definierten Temperatur einsetzt, sondern allmählich noch bevor das Wasser vollständig verdampft ist und sich eine optimale Oberfläche ausgebildet hat. Nach einsetzender Vernetzungsreaktion, wegen der erforderlichen hohen Temperaturen noch austretendes Wasser ist die Ursache von Blasen und Kratern.

Im folgenden wird der Begriff Pulverklarlack-Dispersion als Synonym für Pulverklarlack verwendet.

Die vorliegende Erfindung hat sich nunmehr die Aufgabe gestellt, eine wäßrige Dispersion enthaltend eine feste pulverförmige Komponente A und eine wäßrige Komponente B zur Verfügung zu stellen, die sich mit der bisherigen Flüssiglacktechnologie auf Automobilkarosserien auftragen läßt und UV-härtbar ist.

Diese Aufgabe wird dadurch gelöst , daß die Komponente A einen UV-härtbaren Pulverlack enthält.

Die technischen Vorteile der erfindungsgemäßen Dispersion liegen in der Möglichkeit, UV-Pulverlacke mit deutlich niedrigerem Erweichungspunkt als bei der Trockenapplikation verwenden zu können, da die Teilchen in der Dispersion nicht verbacken können. Diese niedrigere Erweichungstemperatur führt zu gut verlaufenen Oberflächen, die auch erhalten bleiben, weil es nicht notwendig wird zur Vernetzung auf hohe "Einbrenntemperaturen" zu erwärmen. Völlig überraschend hat sich nämlich gezeigt, daß eine UV-Härtung bei einem geringen Restwassergehalt des verschmolzenen Films besonders schnell und vollständig erfolgt. Das von der Hydrophilie der vemetzenden Lackfilme abhängige natürliche Gleichgewicht zwischen Wassergehalt im Film und Umgebungsluft stellt sich danach schon beim Abkühlen rasch ein. Ein weiterer wichtiger Vorteil ist die Energieeinsparung durch die niedrigeren Trocknungs- und Verschmelzungstemperaturen. Da es sich bei den UV-Pulverlackdispersionen um selbstvemetzende Systeme handelt, ist im Gegensatz zu thermisch vemetzenden Pulverlacken eine Homogenisierung von Bindemittel, Vemetzer und Additiven, z. B. mittels Extrusion nicht zwingend erforderlich.

Als UV-härtbare Pulverlacke kommen die nach dem Stand der Technik bekannten Bindemittel in Frage. Besonders geeignet sind Acrylatharze mit seitenständigen funktionellen Gruppen wie z. B. Epoxidgruppen oder Hydroxygruppen, mit Molekulargewichten im Bereich von Mn 1000 bis 10000 mit Molekulargewichtsverteilungen < 4, wie sich beispielsweise in der DE 4203278 beschrieben sind, die anschließend mit Acrylsäure oder Acrylsäurederivaten, wie Acrylsäurechlorid, zu den entsprechenden acrylierten Acrylaten umgesetzt werden (EP 650979.)

Als funktionelle Harze können vorzugsweise solche eingesetzt werden, die aliphatische Verbindungen enthalten. Beispielsweise kommen epoxidhaltige Bindemittel mit einem Gehalt von 5 bis 45 Gew.%, vorzugsweise 25 bis 40 Gew.% an glycidylhaltigen Monomeren in Betracht.

Epoxidgruppenhaltige Copolymere können entweder mit Acrylsäure, Methacrylsäure oder Mischungen aus diesen hergestellt werden. Ebenfalls ist es möglich, Mischungen aus Acrylsäure, Methacrylsäure und (Meth)acrylsäureanhydrid zu verwenden.
Besonders geeignet sind die in der DE 203278 beschriebenen Acrylatharze mit seitenständigen funktionellen Gruppen, z. B. Epoxidgruppen oder Hydroxygruppen, die vorzugsweise mit Acrylsäure oder Acrylsäurederivaten, z.B. Acrylsäurechlorid zu den entsprechenden acrylierten Acrylaten umgesetzt werden (vgl. EP 650 979)

Als epoxifunktionelles Bindemittel für den festen Pulverklarlack sind beispielsweise epoxidgruppenhaltige Polyacrylatharze geeignet, die durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind z.B.bekannt aus EP-A-299 420, DE-B-22 14 650, DE-B-27 49 576, US-A-4,091,048 und US-A-3,781,379.

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat genannt. Weitere Beispiele für ethylenisch ungesättigte Monomere, die keine Epoxidgruppen im Molekül enthalten, sind Säureamide, wie z.B. Acrylsäure- und Methacrylsäureamid, Maleinsäureamid (MSA) vinylaromatische Verbindungen, wie Styrol, Methylstyrol und Vinyltoluol, Nitrile, wie Acrylnttril und Methacrylnitril, Vinyl- und Vinylidenhalogenide, wie Vinylchlorid und Vinylidenfluorid, Vinylester, wie z.B. Vinylacetat und hydroxylgruppenhaltige Monomere, wie z.B. Hydroxyethylacrylat und Hydroxyethylmethacrylat.

Die in den epoxidfunktionellen Bindemitteln eingesetzten epoxidfunktionellen Monomere sind vorzugsweise Glycidylacrylat, Glycidylmethacrylat, Allylester und Allylglycidylether.

Das epoxidgruppenhaltige Polyacrylatharz weist üblicherweise ein Epoxidäquivalentgewicht von 400 bis 2500, vorzugsweise 420 bis 700, ein zahlenmittleres Molekulargewicht (gelpermeationschromatographisch unter Verwendung eines Polystyrolstandards bestimmt) von 2.000 bis 20.000, vorzugsweise von 1.000 bis 10.000, und eine Glasübergangstemperatur (TG) von 30 bis 80, vorzugsweise von 40 bis 70, besonders bevorzugt von 40 bis 60°C auf (gemessen mit Hilfe der Differential Scanning Calorimetrie (DSC)). Ganz besonders bevorzugt werden ca. 50°C. Die Molekulargewichtsverteilungen liegen vorzugsweise unter 6, besonders bevorzugt unter 3. Geeignete Acrylatharze sind z. B. in der DE 203278 beschrieben. Zum Einsatz können auch Gemische aus zwei oder mehr Acrylatharzen kommen.

Das epoxidgruppenhaltige Polyacrylatharz kann nach allgemein gut bekannten Methoden durch Polymerisation hergestellt werden.

Daneben können die funktionellen Harze auch aromatische Verbindungen aufweisen. Deren Anteil sollte unter 30%, vorzugsweise unter 20 % liegen. Beispielsweise kann es sich um vinylaromatische Verbindungen handeln. Ein Beispiel hierfür ist Styrol.

Weiterhin einsetzbar sind:
- Ungesättigte Polymere verschiedenster Polymertypen mit 0,5-3,5 Doppelbindungen auf Molgewicht 1000, die durch polymeranaloge Umsetzung von Polymeren mit ungesättigten Stoffen erhalten werden (DE 24 36 186).
- Polymethacrylate mit niedrigem Molekulargewicht (500-2500) und enger Verteilung, die durch anionische Polymerisation erhalten und durch polymeranaloge Umsetzung mit Doppelbindungen funktionalisiert werden (US 4, 064, 161).
- Blends aus festen Epoxyacrylaten durch Umsetzung von Diepoxyharzen mit Acrylsäure und teilkristallinen festen Polyesteracrylaten aus carboxylterminierten Polyester durch Umsetzung mit Glycidylacrylaten ( US 4, 129, 488)
- Ungesättigte Polyurethanacrylate mit Schmelzbereich von 50-180°C (EP 410 242).
- Blends mit ungesättigten Polyurethanacrylaten mit ungesättigten kristallinen Polyestem zur Verbesserung der Blockfestigkeit (EP 585 742)
- Blends aus ungesättigten Polyestem oder Polyacrylaten mit Polyurethan-Vinylether (EP 636 669).
- Funktionelle Polyacrylate aus olefinisch ungesättigten Monomeren durch Umsetzung funktionell komplementärer Polyacrylate (EP 650 978).
- Ausführungsform zu EP 650 978, wobei die Basispolymeren in einer Hochtemperaturpolymerisation hergestellt werden ( EP 650 985).
- Doppelbindungsfreie Polyacrylate werden über eine H-Übertragung auf photochemisch angeregte, copolymere Fotoinitiatoren vom Norrish-Typ II vemetzt (DE 44 13 436).
- Doppelbindungsfreie Polyacrylate mit Dihydrodicyclopentadienolacrylat werden über eine H-Übertragung auf photochemisch angeregte, copolymere Fotoinitiatoren vom Norrish-Typ II vernetzt (DE 196 00 147).

Weitere Systeme für Bindemittel A
- PCT/EP 96/05769
   Vernetzt polymere Verbindungen mit mindestens einer ethylenischen Doppelverbindung mit org. Verbindungen die mindestens ein H-Atom mit einer Bindungsenergie von max. 397 Kg/mol enthalten.
- PCT/EP97/07074
   Offenbart ein Verfahren zur Herstellung von strahlenvemetzbaren Acrylatpolymeren durch polymeranloge Umsetzung von Polyacrylaten mit Stoffen, durch die eine Gruppe eingeführt wird, die mit aktivischer Strahlung Radikale bildet.

Die Komponente A kann eine oder mehrere der genannten Stoffe enthalten. Ihre Herstellung kann nach den dort genannten Methoden erfolgen, ohne daß die Auswahl der Komponente A auf Stoffe dieser Schriften beschränkt ist.
Die für die UV-Vernetzung benötigten Fotoinitiatoren sind in der Regel in Komponenten A enthalten und werden in der Regel ausgewählt aus den nach dem Stand der Technik bekannten Stoffen. Ohne zugesetzte Fotoinitiatoren sind Polymere laut DE 44 13 436 und DE 196 00 147 UV-härtbar. Zu besonders gut vernetzten Filmen führen Komponenten A die Mischungen von ungesättigten Polymeren und Polymeren laut DE 44 13 436 und DE 196 00 147 mit besonders hohem Anteil an photochemisch anregbaren, copolymeren Fotoinitiatoren vom Norrish-Typ II., die dabei als polymere Fotoinitiatoren fungieren.
Die Komponente A kann aus einheitlichen Bindemitteln oder aus Blends verschiedener Bindemittel bestehen, wobei nicht alle Bestandteile UVvernetzbar sein müssen. Es kann auch günstig sein, UV-härtbare Bindemittel in Kombination mit thermisch härtbaren Bindemitteln zu verwenden, dabei kommt es zur Ausbildung sich durchdringender Netzwerke mit besonders günstigen Filmeigenschaften.

Ferner kann Komponente A Vemetzer enthalten, so daß die photochemische Härtung noch durch eine thermische Vernetzung ergänzt werden kann.

Als Vernetzer sind Carbonsäuren, insbesondere gesättigte, geradkettige, aliphatische Dicarbonsäuren mit 3 bis 20 C-Atomen im Molekül geeignet.

Ganz besonders bevorzugt wird Dodecan-1,12-dicarbonsäure eingesetzt. Zur Modifizierung der Eigenschaften der fertigen Pulverklarlacke können ggf. noch andere Carboxylgruppen enthaltende Vernetzer eingesetzt werden. Als Beispiele hierfür seien gesättigte verzweigte oder ungesättigte geradkettige Di- und Polycarbonsäuren sowie Polymere mit Carboxylgruppen genannt.

Ferner sind auch Pulverklarlacke geeignet, die einen epoxifunktionellen Vernetzer und ein säurefunktionelles Bindemittel enthalten.

Ein weiteres Beispiel sind Tris(Alkoxycarbonylamino)Triazine gemäß der US-PS 4, 939, 213, der US-PS 5, 084, 541 und der EP 0 624 577. Hierbei handelt es sich um Tris(Alkoxycarbonylamino)Triazine der Formel 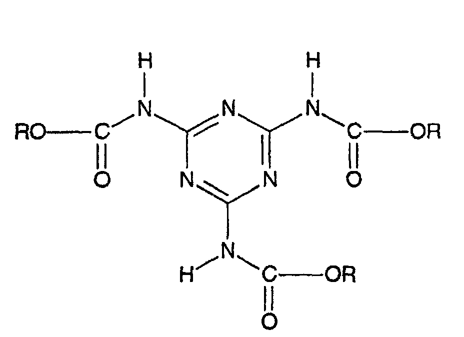 wobei R=Methyl, Butyl-, Ethylhexyl-Gruppen bedeuten. Ebenso können Derivate der genannten Verbindungen zum Einsatz kommen.

Erfindungsgemäß bevorzugt sind die Methyl-, Butyl-Mischester. Diese haben gegenüber der reinen Methylestern den Vorzug der besseren Löslichkeit, in Polymerschmelzen und Butyl-Ethylhexyl-Mischester. Bevorzugt sind erfindungsgemäß auch die reinen Butylester.

Die Tris(Alkoxycarbonylamino)Triazine und deren Derivate können erfindungsgemäß auch im Gemisch mit herkömmlichen Vernetzungsmitteln eingesetzt werden (Komponente C). Hier kommen insbesondere von den Tris(Alkoxycarbonylamino)Triazinen verschiedene blockierte Polyisocyanate in Betracht. Ebenso sind Aminoplastharze z.B. Melaminharze, einsetzbar.
Im Prinzip kann jedes für transparente Decklacke geeignete Aminoplastharz oder eine Mischung aus solchen Aminoplastharzen eingesetzt werden.

Derartige Harze sind dem Fachmann gut bekannt und werden von vielen Firmen als Verkaufsprodukte angeboten. Aminoplastharze sind Kondensationsprodukte aus Aldehyden, insbesondere Formaldehyd und beispielsweise Harnstoff, Melamin, Guanamin und Benzoguanamin. Die Aminoplastharze enthalten Alkohol-, vorzugsweise Methylolgruppen, die in der Regel teilweise oder vollständig mit Alkoholen verethert sind.
Im übrigen können auch alle anderen , geeigneten, nach dem Stand der Technik bekannten Vernetzungsmittel in Betracht kommen, z. B. verkappte polyfunktionelle Isocyanate.

Als säurefunktionelles Bindemittel sind beispielsweise saure Polyacrylatharze geeignet, die durch Copolymerisation von mindestens einem ethylenisch ungesättigten Monomer, das mindestens eine Säuregruppe im Molekül enthält, mit mindestens einem weiteren ethylenisch ungesättigten Monomer, das keine Säuregruppe im Molekül enthält, herstellbar sind.

Das epoxidgruppenhaltige Bindemittel bzw. der carboxylgruppenhaltige Vernetzer und das Carboxyl- bzw. das Bindemittel werden üblicherweise in einer solchen Menge eingesetzt, daß pro Äquivalent Epoxidgruppen 0,5 bis 1,5, vorzugsweise 0,75 bis 1,25 Äquivalente Carboxylgruppen vorliegen. Die Menge an vorliegenden Carboxylgruppen kann durch Titration mit einer alkoholischen KOH-Lösung ermittelt werden.

Erfindungsgemäß kann das Bindemittel vinylaromatische Verbindungen, insbesondere Styrol enthalten . Um die Gefahr der Rißbildung zu begrenzen, liegt der Gehalt vorzugsweise jedoch nicht über 35 Gew.-%. Bevorzugt werden 10 bis 25 Gew.-%.

Die festen Pulverlacke enthalten ggf. einen oder mehrere geeignete Katalysatoren für die Epoxidharz-Aushärtung. Geeignete Katalysatoren sind Phosphoniumsalze organischer oder anorganischer Säuren, quartemäre Ammoniumverbindungen Amine, Imidazol und Imidazolderivate. Die Katalysatoren werden im allgemeinen in Anteilen von 0,001 Gew.-% bis etwa 2 Gew.-%, bezogen auf das Gesamtgewicht des Epoxidharzes und des Vernetzungsmittels, eingesetzt.

Beispiele für geeignete Phosphonium-Katalysatoren sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex. Diese sowie weitere geeignete Phosphonium-Katalysatoren sind z.B. beschrieben in US-PS 3,477,990 und US-PS 3,341,580.

Geeignete Imidazol-Katalysatoren sind beispielsweise 2-Styrylimidazol, 1-Benzyl-2-methylimidazol, 2-Methylimidazol und 2-Butylimidazol. Diese sowie weitere Imidazol-Katalysatoren sind z.B. beschrieben in dem belgischen Patent Nr. 756,693.

Außerdem können die festen Pulverlacke ggf. noch Hilfsmittel und Additive enthalten. Beispiele hierfür sind Verlaufsmittel, Antioxidantien, UV-Absorber, Radikalfänger, Rieselhilfen und Entgasungsmittel, wie beispielsweise Benzoin.

Die Herstellung der festen Pulverlacke erfolgt nach bekannten Methoden (vgl. z,.B. Produkt-Information der Firma BASF Lacke + Farben AG, "Pulverlacke", 1990) durch Homogenisieren und Dispergieren, beispielsweise mittels eines Extruders, Schneckenkneters u.ä.. Nach Herstellung der Pulverlacke werden diese durch Vermahlen und ggf. durch Sichten und Sieben für die Dispergierung vorbereitet.

Zur Herstellung der Dispersion erfolgt eine Dispergierung der Komponente A in einer wässrigen Komponente B. Ggf. enthält Komponente B Bestandteile, durch die die erfindungegemäßen Pulverlacke dispergiert und die Dispersion stabilisiert wird. Durch weitere Hilfsstoffe können die erforderlichen anwendungstechnischen Eigenschaften hergestellt werden. In Komponente B können ionische und/oder nichtionische monomere und/oder polymere Tenside und Schutzkolloide enthalten sein. Die Auswahl erfolgt dabei unter Berücksichtigung der lacktechnischen Anforderungen an die gehärteten Filme. Als günstig hat sich die Verwendung von polymeren Stoffen erwiesen, die den Komponenten A chemisch ähnlich sind und bei der UV-Härtung mit den in den Komponenten A enthaltenen Bindemitteln covemetzen können. Stoffe dieser Art sind z. B. für die erfindungsgemäße Dispersion auf Basis von Polyacrylaten. Vorzugsweise handelt es sich um Polyacrylatschutzkolloide die aus (Meth)-Acrylaten durch Copolymerisation mit (Meth)-Acrylsäure erhalten werden und bei denen ein Teil der Carboxylgruppen mit Glycidyl(meth)acrylat umgesetzt wird und ein weiterer Teil mit Stickstoffbasen neutralisiert wurde.

Besonders geeignet sind auch doppelbindungsfreie Bindemittel laut z. B. DE 44 13 436 und/oder DE 196 00 147 die mit Anteilen von (Meth)-Acrylsäure polymerisiert wurden und die dann ganz oder zum Teil mit Stickstoffbasen neutralisiert wurden. Auch die Verwendung bindemittelähnlicher Dispergatoren, die basische Gruppen aufweisen und mit Säuren (teil)-neutralisiert wurden, ist erfindungsgemäß bevorzugt. Ein Vorzug der vorliegenden Erfindung besteht darin, sowohl kationische als auch anionische Stabilisierungen frei wählen zu können und z. B. das kostengünstigste oder chemisch leicht durchzuführende Prinzip wählen zu können, ohne, daß auf die Chemie der Vernetzungsreaktion Rücksicht genommen werden muß. So sind z. B. die Bindemittel nach DE 44 13 436 und DE 196 00 147 gegen die meisten chemischen Reaktionen inert und werden nur durch energiereiche Bestrahlung vernetzt. Solche Systeme lassen sich dann durch konventionelle Powderslurryverfahren auf verschiedene Substrate auftragen und bei höherer Temperatur (oberhalb der Schmelztemperatur des Harzes) durch UV- oder Elektronenstrahlung härten.

Für die erfindungsgemäße Dispersion auf Basis von Polyurethanen sind Polyurethanschutzkolloide besonders geeignet, die aus Isocyanaten, Polyolen, Hydroxycarbonsäuren und Hydroxy-(meth)acrylaten und/oder Hydroxyvinylethern erhalten und mit Stickstoffbasen (teil-)-neutralisiert werden. Die genannten Schutzkolloide haben eine gute dispergierende und häufig auch erwünschte verdickende Wirkung und werden bei der UV-Härtung mit den verschmolzenen Pulverteilchen covemetzt, woraus außergewöhnlich wetterbeständige Lackierungen resultieren. Es kommen aber auch kommerziell zugängliche Stoffe in Frage, wie anionische und kationische Seifen, nichtionische Tenside z. B. aus Basis von Polyoxyethylen/-propylen-Blockpolymeren oder Polyoxyethylenfettsäure-estern. Geeignet sind auch Polyvinylpyrrolidonund Polyvinylalkohol-Schutzkolloide, die gut stabilisierend und verdickend wirken. Die Auswahl auch ggf. auch Kombination von verschiedenen Stoffen ist eine Optimierungsaufgabe, die dem Fachmann bekannt ist und erfolgt im Einzelfall nach den Anforderungen an die Dispersion, z. B. was Pumpfähigkeit, Fließverhalten, Viskosität oder Lagerbedingungen betrifft oder den Anforderungen an den gehärteten Lack, z. B. bezüglich Wetterbeständigkeit, Überlackierbarkeit, Glanz und Zwischenhaftung. Die Bindemittel können pigmentiert oder unpigmentiert sein bzw. ohne oder mit Farbstoffen versehen sein. Bevorzugt sind jedoch unpigmentierte Bindemittel zur Herstellung von Pulverklarlacken.

Als weiteren wesentlichen Bestandteil enthält die wässrige Komponente B der Pulverlackdispersion wenigstens einen nicht-ionischen Verdicker a). Bevorzugt werden nicht-ionische Assoziativ-Verdicker a) eingesetzt. Das gilt insbesondere, wenn pH-Werte von 4-7 einzuhalten sind. Strukturmerkmale solcher Assoziativ-Verdicker a) sind:
aa) ein hydrophiles Gerüst, das eine ausreichende Wasserlöslichkeit sicherstellt und
ab) hydrophobe Gruppen, die zu einer assoziativen Wechselwirkung im wäßrigen Medium fähig sind.

Als hydrophobe Gruppen werden beispielsweise langkettige Alkylreste, wie z.B. Dodecyl-, Hexadecyl- oder Octadecyl-Reste, oder Alkarylreste, wie z.B. Octylphenyl- oder Nonylphenyl-Reste eingesetzt.
Als hydrophile Gerüste werden vorzugsweise Polyacrylate, Celluloseether oder besonders bevorzugt Polyurethane eingesetzt, die die hydrophoben Gruppen als Polymerbausteine enthalten.

Ganz besonders bevorzugt sind als hydrophile Gerüste Polyurethane, die Polyetherketten als Bausteine enthalten, vorzugsweise aus Polyethylenoxid.
Bei der Synthese solcher Polyetherpolyurethane dienen die Di- und oder Polyisocyanate, bevorzugt aliphatische Diisocyanate, besonders bevorzugt ggf. alkylsubstituiertes 1,6-Hexamethylendiisocyanat, zur Verknüpfung der Hydroxylgruppen-terminierten Polyetherbausteine untereineinander und zur Verknüpfung der Polyetherbausteine mit den hydrophoben Endgruppenbausteinen, die beispielsweise monofunktionelle Alkohole und/oder Amine mit den schon genannten langkettigen Alkylresten oder Aralkylresten sein können.
Die Pulverlackdispersionen kann femer Dispergierhilfsmittel enthalten. Beispiele sind u. a Aryl-Polyglycolether, Octylphenolethoxylate (teilweise hydriert).

Zu den bevorzugt in Komponente B einsetzbaren Dispergierhilfsmitteln zählen u. a. Polyurethane.
Diese können vorzugsweise aus
1. wenigstens einer organischen Komponente mit wenigstens zwei
   reaktiven
   Wasserstoffatomen,
2. einem monofunktionalen Ether und
3. einem Polyisocyanat
   bestehen.

Die organische Komponente der Polyurethanzusammensetzung umfaßt ein Polyesterpolyol, ein niedermolekulares Diol und/oder Triol oder Gemische davon. Ggfs. kann ein trifunktionales Hydroxylgruppen enthaltendes Monomer eingesetzt werden.

In einer zweiten bevorzugten Ausführungsform umfaßt das Polyurethan
1. wenigstens eine organische Komponente mit wenigstens zwei reaktiven Wasserstoffatomen,
2. einen nicht-ionischen Stabilisator der hergestellt wird durch Reaktion
   I. eines monofunktionalen Polyethers mit einer Polyisocyanat enthaltenden
      Komponente zur Erzeugung eines Isocyanatzwischenproduktes und
   II. einer Komponente mit wenigstens einer aktiven Amin- und wenigstens zwei
      aktiven Hydroxylgruppen und
3. wenigstens einer Polyisocyanat enthaltenden Komponente.

Die organische Komponente umfaßt vorzugsweise Polyetherpolyesterpolyol, ein niedermolekulares Diol und/oder Triol oder Gemische davon.

Die Polyesterkomponente kann hergestellt werden durch Reaktion wenigstens einer Dicarbonsäure und wenigstens einer Alkoholkomponente, wobei der Alkohol wenigstens zwei Hydroxylgruppen enthält. Die Carbonsäurekomponente enthält zwei oder mehr Carboxylgruppen.

Zusätzlich zu den Carbonsäuren kann das Polyesterharz auch ein oder mehr niedermolekulare Diole oder Triole enthalten. Einsetzbar ist grundsätzlich jedes Polyol.

Die eingesetzten Polyesterharze oder Gemische der Polyesterharze enthalten vorzugsweise endständige Hydroxylgruppen. Dies wird bewirkt durch Zusatz eines Überschusses an Polyolen.

Zur Synthese der Polyester können sowohl Monocarbonsäuren als auch Monoalkohole eingesetzt werden. Vorzugsweise sind die Monocarbonsäuren und/oder Monoalkohole jedoch in einer sehr geringen Gewichtsmenge in dem Polyesterharz enthalten.

Die vorzugsweise eingesetzten Polyesterdiolkomponenten umfassen zwischen 20 und 80 Gew.-% des Polyurethanharzes. Vorzugsweise liegen die Mengen zwischen 50 und 70 Gew.-%. Ganz besonders bevorzugt werden 55 bis 65 Gew.-%.

Zur Herstellung des Polyurethans werden Polyesterpolyole mit einem Molekulargewicht zwischen 500 und 5000 eingesetzt. Bevorzugt werden Molekulargewichte zwischen 1000 und 3500.

Zusätzlich zu den Polyesterdiolen können die Polyurethanharze weitere organische Komponenten mit wenigstens zwei reaktiven Wasserstoffatomen enthalten. Hierbei handelt es sich vorzugsweise um Diole und Triole, Thiole und/oder Amine oder Gemische dieser Stoffe. Die Komponenten, die zur Synthese der Polyesterkomponente eingesetzt werden, können auch als separate Komponenten hier zum Einsatz kommen. D.h., als zusätzliche organische Komponente in dem Polyurethan kommen auch Di- oder Trialkohole, wie z.B. Neopentylglykol oder 1,6-Hexandiol in Betracht.

Das Molekulargewicht der eingesetzten Diole und/oder Triole in dem Polyurethanharz liegt zwischen 0 und 20 Gew.-%. Bevorzugt werden 1 bis 6 Gew.-%.

Das Polyurethanharz enthält ferner Polyisocyanate, insbesondere Diisocyanate. Die Isocyanate liegen zwischen 5 und 40 Gew.-% bezogen auf die Polyurethanmasse. Besonders bevorzugt werden 10 bis 30 Gew.-% und ganz besonders 10 bis 20 Gew.-%. Zur Herstellung des Polyurethans wird schließlich ein monofunktioneller Polyether eingesetzt.

In einer zweiten Variante wird ein nicht-ionischer Stabilisator hergestellt, in dem vorzugsweise ein monofunktionaler Polyether mit einem Diisocyanat zur Reaktion gebracht wird. Das entstandene Reaktionsprodukt wird sodann mit einer Komponente umgesetzt, die wenigstens eine aktive Amingruppe und wenigstens zwei aktive Hydroxylgruppen enthält.

In einer besonderen Ausführungsform umfaßt das Polyurethan eine Reaktionsprodukt aus:
1. Einem Polyesterpolyol, welches seinerseits ein Reaktionsprodukt aus einer
   Carbonsäure mit wenigstens zwei Carboxylgruppen und einer Komponente mit
   wenigstens zwei Hydroxylgruppen,
2. wenigstens einer niedermolekularen Komponente mit wenigstens zwei Hydroxylgruppen,
3. wenigstens einer polyisocyanathaltigen Komponente,
4. einem nicht-ionischen Stabilisator, hergestellt durch Reaktion eines monofunktionalen Ethers mit einem Polyisocyanat und anschließender Umsetzung des erhaltenen Reaktionsprodukts mit einer Komponente,
   die
   wenigstens eine aktive Amin- und wenigstens zwei aktive Hydroxylgruppen
   enthält.

In einer vierten Variante umfaßt das Polyurethan ein Reaktionsprodukt aus
1. einem Polyesterpolyol,
2. wenigstens einem niedermolekularen Diol oder Triol,
3. einem Polyisocyanat,
4. einem Trihydroxygruppen enthaltenden Monomer,
5. einem monofunktionalen Hydroxygruppen enthaltenden Polyether.

Die Polyester werden synthetisiert mit dem oben beschriebenen Carboxylsäurekomponenten und einem Überschuß an Polyolen. Der Überschuß an Polyolen wird so gewählt, daß vorzugsweise endständige Hydroxylgruppen entstehen. Die Polyole haben vorzugsweise eine Hydroxylfunktionalität von wenigstens zwei.

Das Polyesterharz besteht vorzugsweise aus einem oder mehreren Polyolen, vorzugsweise aus einem Diol. Vorzugsweise eingesetzte Diole sind Alkylenglykole, wie Ethylenglykol, Propylenglykol, Butylenglykol und Neopentylglykol, 1,6-Hexandiol oder andere Glykole, wie Bisphenol-A, Cyclohexandimethanol, Caprolactondiol, hydroxyalkyliertes Bisphenol und ähnliche Verbindungen.

Die niedermolekularen vorzugsweise erfindungsgemäß eingesetzten Diole sind aus dem Stand der Technik bekannt. Hierzu zählen aliphatische Diole, vorzugsweise Alkylenpolyole mit 2 bis 18 Kohlenstoffatomen. Beispiele hierfür sind 1,4-Butandiol, cycloaliphatische Diole, wie 1,2-Cyclohexandiol und Cyclohexandimethanol.

Als organische Polyisocyanate kommen erfindungsgemäß vorzugsweise solche in Betracht, die wenigstens zwei Isocyanatgruppen umfassen. Insbesondere werden die Isocyanate bevorzugt, z.B. p-Phenylendiisocyanate, Biphenyl 4,4'-Diisocyanate, Toluoldiisocyanate, 3,3'-Dimethyl-4,4 Biphenylendiisocyanate, 1,4-Tetramethylendiisocyanate, 1,6-Hexamethylendiisocyanate, 2,2,4-Trimethylhexan-1,6-Diisocyanate, Methylen-bis-(phenylisocyanate), 1,5-Naphthalendiisocyanate, Bis(isocyanatoethylfumarate), Isophorondiisocyanate und Methylen-bis-(4-Cyclohexylisocyanate).

Neben den genannten Diisocyanaten werden auch andere multifunktionale Isocyanate verwendet. Beispiele sind 1,2,4 Benzentriisocyanate und Polymethylenpolyphenylisocyanate.

Besonders bevorzugt ist der Einsatz von aliphatischen Diisocyanaten, z.B. 1,6- Hexamethylendiisocyanat, 1,4-Butylendiisocyanat, Methylen-bis-(4-Cyclohexylisocyanat), Isophorondiisocyanat und 2,4-Toluoldiisocyanat.

Längerkettige Polyurethanharze können erhalten werden durch Kettenverlängerung mit diol- und/oder triolgruppenenthaltenden Komponenten. Besonders bevorzugt werden Kettenverlängerungsmittel mit wenigstens zwei aktiven Hydrogengruppen, z.B. Diolen, Thioten, Diaminen oder Gemischen dieser Stoffe, z.B. Alkanolaminen, Aminoalkylmercaptanen, Hydroxyalkylmercaptanen und ähnlichen Verbindungen.

Beispiele für als Kettenverlängerungsmittel eingesetzte Diole sind 1,6-Hexandiol, Cyclohexandimethylol und 1,4-Butandiol. Ein besonders bevorzugtes Diol ist Neopentylglykol.

Die einsetzbaren Polyether sind vorzugsweise mono- oder difunktionelle Polyether. Zu den monofunktionellen zählen beispielsweise solche, hergestellt werden durch Polymerisation von Ethylenoxiden, Propylenoxiden oder Gemischen hiervon.

Das beschriebene Polyurethanprodukt kann mit herkömmlichen Vernetzern vermischt werden. Hierzu zählen vorzugsweise Aminoplastharze, z.B. Melamin. Ebenso können Kondensationsprodukte anderer Amine und Amide eingesetzt werden, z.B. Aldehydkondensate von Triazinen, Diazinen, Triazolen, Guanidinen, Guanaminen oder alkylund arylsubstituierte Derivate solcher Komponenten. Einige Beispiele solcher Komponenten sind N,N'-Dimethylharnstoff, Dicyandiamide, 2-Chloro-4,6-Diamino-1,3,5-Triazine, 6-Methyl-2,4-Diamino-, 1,3,5-Triazine, 3,5-Diamino-Triazole, Triaminopyrimidine, 2-Mercapto-4,6-Diaminopyrimidine, 2,4,6-Triethyltriamino-1,3,5-Triazine und ähnliche Stoffe.

Als Aldehyd kommen vorzugsweise Formaldehyde in Betracht. Ebenso können Acetaldehyde, Crotonaldehyde, Acrolein, Benzaldehyde, Furfural zum Einsatz kommen.

Die Amin-Aldehydkondensationsprodukte können Methylol oder ähnliche Alkoholgruppen enthalten. Beispiele für einsetzbare Alkohole sind Methanol, Ethanol, Propanol, Butanol, Pentanol, Hexanol, Heptanol, Benzylalkohol und aromatische Alkohole, cyclische Alkohole, wie Cyclohexanol, Monoether oder Glykole sowie substituierte Alkohole, z.B. 3-Chloropropanol.

Neben den genannten Isocyanaten können auch blockierte Polyisocyanate als Vernetzungsmittel eingesetzt werden. Hierzu zählen beispielsweise organische Polyisocyanate wie Trimethylen-, Tetramethylen-, Hexamethylen-, 1,2-Propylen-, 1,2-Butylen und 2,3-Butylen-Diisocyanate. Ebenso sind einsetzbare Cycloalkenkomponenten wie 1,3-Cyclopentan-, 1,4-Cyclohexan- und 1,2-Cyclohexandiisocyanate. Femer sind aromatische Komponenten wie Phenylen-, p-Phenylen-, 4,4'-Diphenyl-, 1,5-Naphthalen und 1,4-Naphthalendiisocyanate verwendbar. Darüber hinaus kommen aliphatisch-aromatische Komponenten wie 4,4'-Diphenylenmethan, 2,4- oder 2,6- Tolylen oder Gemische hiervon, 4,4'-Toluidin und 1,4 Xylylendiisocyanate in Betracht. Weitere Beispiele sind kernsubstituierte aromatische Komponenten wie 4,4'-Diphenyletherdiisocyanate und Chlordiphenylendiisocyanate. Einsetzbare Triisocyanate sind Triphenylmethan-4,4', 4''-Triisocyanate, 1,3,5-Triisocyanatbenzene und 2,4,6-Triisocyanattoluol. Verwendbare Tetraisocyanate sind schließlich 4,4'-Diphenyl-dimethylmethan, 2,2'-, 5,5'-Tetraisocyanate.

Als Blockierungsmittel können aliphatische, cycloaliphatische aromatische Alkylmonoalkohole eingesetzt werden. Hierzu zählen beispielsweise Methyl-, Ethyl-, Chlorethyl-, Propyl-, Butyl-, Cyclohexyl-, Heptyl-, Octyl-, Nonyl 3,3,5-Trimethylhexanol, Decyl- und Lauryl-Alkohole. Als phenolische Komponenten sind z.B. Phenole oder substituierte Phenole verwendbar. Beispiele hierfür sind Kresol, Xylenol, Nitrophesol, Chlorphenol, Ethylphenol, 1-Butylphenol und 2,5-Di-t-Butyl-4-Hydroxytoluol.

Weitere geeignete Blockierungsmittel sind tertiäre Hydroxylamine, z.B. Diethylethanolamin und Oxime, wie Methylethylketonoxim, Acetonoxim und Cyclohexanonoxim.

Die beschriebenen Vernetzungsmittel sind in der Polyurethandispersion in Mengen von 2 bis 15 Gew.-%, vorzugsweise 4 bis 8 Gew.-% vorhanden.

Das erhaltene Polyurethan kann in der Powderslurry mit einem Anteil von 2 bis 20 Gew.-%, vorzugsweise 5 bis 15 Gew.-% vorhanden sein.

Eine besonders bevorzugte Ausführung betrifft nicht-ionische (Assoziativ)-Verdicker die photochemisch mit sich selbst und/oder den übrigen Bindemitteln A reagieren können wodurch eine weitere Verbesserung der Lackeigenschaften erreicht wird. Photochemisch aktive nicht-ionische Verdicker lassen sich erhalten durch Einbau von Doppelbindungen oder Gruppen mit leicht abstrahierbaren H-Atomen, wie Dicyclopentadienylgruppen und/oder Photoinitiatorgruppen vom Norrish II-Typ, insbesondere Benzophenongruppen.

Aus den Komponenten A und B kann durch Naßvermahlung oder durch Einrühren des in der Komponente A enthaltenen trocken vermahlenen Pulverlacks die wäßrige Pulverklarlackdispersion hergestellt werden. Besonders bevorzugt wird die Naßvermahlung.

Die vorliegende Erfindung betrifft auch ein Verfahren zur Herstellung einer wäßrigen Pulverlackdispersion auf der Basis der beschriebenen Komponente A , die erfindungsgemäß in einer Komponente B dispergiert wird. Letztere besteht aus einer wässrigen Dispersion von Katalysatoren, Hilfsstoffen, Antischaummitteln, Antioxidantien, Netzmitteln, UV-Absorbern, Radikalfängern, Bioziden, Wasserrückhaltemitteln geringe Mengen Lösemitteln und/oder Dispergierhilfsmitteln, vorzugsweise carboxyfunktionelle Dispergierhilfsmitteln.
Die acrylierten Acrylatharze können dann mit dem o. g. Dispergierhilfsmitteln durch Mahlen auf durchschnittliche Teilchengröße von einigen µm dispergiert werden.

Besonders bevorzugt wird die Naßvermahlung einer Vordispersion. Dazu werden die Lackpulver vor oder nach den Stoffen B und weiteren Hilfsstoffen in Wasser eindispergiert, z. B. unter einem schnelllaufenden Dissolver. Es ist auch möglich, Stoffe B und Hilfsstoffe zunächst nur teilweise zuzugeben und vor oder nach einer Nachdispergierung und/oder Naßverrnahlung nachzudosieren. In bestimmten Fällen ist die Vordispergierung direkt verarbeitbar, in der Regel wird sie zur Einstellung der erwünschten Feinteiligkeit in geeigneten Mühlen, z. B. Rührwerkskugelmühlen nachvermahlen. Nach der Dispergierung wird ggf. auf ein gewünschtes Komgrößenspektrum vermahlen, ggf. der pH-Wert auf den in Abhängigkeit des Systems ermittelte Wert eingestellt und filtriert. Ein spezieller Vorteil der Erfindung, im Vergleich zu Pulverlacken, liegt darin, daß auch ein sehr feinteiliges Korngrößenspektrum verarbeitet werden kann, z. B. mit 1-3 µm, bei dem Pulverlacke nicht mehr applizierbar sind, mit dem Resultat einer Oberflächengüte (Verlauf) die mit Pulvern nicht erreichbar ist.

Nach der Dispergierung der Komponente A in der Komponente B wird der pH-Wert vorzugsweise auf 4,0 bis 7,0, besonders bevorzugt auf 5,5 bis 6,5 eingestellt.

Die mittlere Korngröße liegt zwischen 1 und 200 µm, vorzugsweise unter 20 µm,besonders bevorzugt bei 2 bis 10µm. Der Festkörpergehalt der wäßrigen Pulverklarlackdispersion liegt zwischen 15 und 50 %.

Der Dispersion können vor oder nach der Naßvermahlung bzw. dem Eintragen des trockenen Pulverlackes in das Wasser 0 bis 5 Gew.% eines Entschäumergemisches, eines Ammonium- und/oder Alkalisalzes, eines carboxylfunktionellen oder nichtionischen Dispergierhilfsmittels, Netzmittels und/oder Verdickergemisches sowie der anderen Additive zugesetzt werden. Vorzugsweise werden erfindungsgemäß Entschäumer, Dispergierhilfs-, Netz- und/oder Verdickungsmittel zunächst in Wasser dispergiert. Dann werden kleine Portionen des Pulverklarlackes eingerührt. Anschließend werden noch einmal Entschäumer, Dispergierhilfs-, Verdickungs- und Netzmittel eindispergiert. Abschließend werden nochmals in kleinen Portionen Pulverklarlacke eingerührt.

Die Einstellung des pH-Wertes erfolgt erfindungsgemäß vorzugsweise mit Aminen, besonders im Fall anionisch stabilisierter Dispersionen. Der pH-Wert kann hierbei zunächst ansteigen, daß eine stark basische Dispersion entsteht. Der pH-Wert fällt jedoch innerhalb mehrerer Stunden oder Tage wieder auf die oben angeführten Werte.

Es sind aber auch die in der oben beschriebenen Weise kationisch stabilisierte Dispersionen möglich, bei denen die Einstellung des ph-Wertes mit Säuren, bevorzugt leichtflüchtigen Carbonsäuren, erfolgt. Besonders geeignet sind auch doppelbindungsfreie Bindemittel laut z. B. DE 44 13 436 und/oder DE 196 00 147 die mit Anteilen von (Meth)-Acrylsäure polymerisiert wurden und die dann ganz oder zum Teil mit Stickstoffbasen neutralisiert wurden. Auch die Verwendung bindemittelähnlicher Dispergatoren die basische Gruppen aufweisen und mit Säuren (teil)-neutralisiert wurden ist erfindungsgemäß bevorzugt. Ein Vorzug der vorliegenden Erfindung besteht darin, sowohl Kationische als auch anionische Stabilisierungen frei wählen zu können und z. B. das kostengünstigste oder chemisch leicht durchzuführende Prinzip wählen zu können, ohne, daß auf die Chemie der Vernetzungsreaktion Rücksicht genommen werden muß. So sind z. B. die Bindemittel nach DE 44 13 436 und DE 196 00 147 gegen die meisten chemischen Reaktionen inert und werden nur durch energiereiche Bestrahlung vernetzt. Solche Systeme lassen sich dann durch konventionelle Powderslurryverfahren auf verschiedene Substrate auftragen und bei höherer Temperatur (oberhalb der Schmelztemperatur des Harzes) durch UV- oder Elektronenstrahlung härten.

Die erfindungsgemäße Pulverklarlackdispersion läßt sich als Überzug von Basislacken, vorzugsweise in der Automobilindustrie, verwenden. Besonders geeignet ist die Klarlackdispersion für Wasserbasislacke auf Basis eines Polyesters, Polyurethanharzes und eines Aminoplastharzes.

Als Substrate kommen alle zu lackierenden Oberflächen die einer UV-Härtung zugänglich sind in Betracht, das sind z. B. Metalle, Kunsstoffe, Holz, Keramik, Stein, Textil, Faserverbunde, Leder, Glas, Glasfasern, Glas- und Steinwolle, mineral- und harzgebundene Baustoffe, wie Gipsund Zementplatten, Dachziegel und besonders zur Lackierung von Automobilen. Erfindungsgemäße Pulverklarlackdispersionen sind speziell geeeignet als Überzug von Basislacken, vorzugsweise in der Automobilindustrie. Besonders geeignet sind sie als Klarlacke über Wasserbasislacken auf Basis von Polyestern, Polyurethanharzen und Aminoplastharzen.

Die auf die Substrate aufgebrachten UV-Pulverlackdispersionen werden vor der UV-Härtung zunächst weitgehend vorgetrocknet. Dies geschieht bei Raumtemperatur oder beschleunigt bei erhöhter Temperatur. In der Regel beträgt die erhöhte Temperatur 40 bis 70°C, vorzugsweise 50 bis 65°C. Das Vortrocknen wird für 2 bis 10 Minuten, vorzugsweise 4 bis 8 Minuten durchgeführt. Danach wird die Temperatur auf die Aufschmelztemperatur der Harzpartikel gesteigert und nach Ausbildung einer glatten Oberfläche mit energiereicher Strahlung, bevorzugt UV-Licht, vernetzt. Es kann aber auch auf das Vortrocknen verzichtet werden und in einem Temperaturprogramm in einem Schritt getrocknet und geschmolzen werden. Ein großer Vorteil der Erfindung ist darin zu sehen, daß die Belichtung bei Temperaturen von 90 bis 120°C deutlich unter den üblichen Einbrenntemperaturen von 140 bis 180°C erfolgen kann. Bei der niedrigen Belichtungstemperatur noch im Film verbliebenes Wasser stört nicht die Härtung und erzeugt keine Kocher oder Krater. Das stoffabhängige Gleichgewicht zwischen Luftfeuchtigkeit und Film stellt sich dann wie bei allen Lackierungen in kurzer Zeit selbst ein.

Die erfindungsgemäßen Pulverklarlackdispersionen lassen sich mit den aus der Flüssiglacktechnologie bekannten Methoden aufbringen. Insbesondere können sie mittels Spritzverfahren aufgebracht werden. Ebenso kommen elektrostatisch unterstützte Hochrotation oder pneumatische Applikation in Betracht Mit dem erfindungsgemäßen Verfahren können Schichtdicken von 10 bis 60, vorzugsweise 20 bis 60, besonders bevorzugt 20 bis 50 µm, höchst bevorzugt 25 bis 45 µm erreicht werden. Lackierungen mit vergleichbarer Qualität konnten bisher nach dem Stand der Technik unter Einsatz von Pulverklarlacken nur durch Auftrag von Schichtdicken von 65 bis 80 µm erreicht werden.

Im folgenden wird die Erfindung unter Bezugnahme auf die Beispiele näher beschrieben ohne sie auf diese einzuschränken:
1. UV-covemetzbares Polyacrylatschutzkolloid
   In einem Rührkolben mit Zulauf und Rückflußkühler werden unter einem leichten Stickstoffstrom vorgelegt
   Vorlage
      144 T Zulauf 1
      136 T Butanon 2
   Zulauf 1
      460 T Butylmethacrylat
      160 T Metylmethacrylat
      180 T Acrylsäure
   Zulauf 2
      21,3 T t-Butylpivalat (75%ig)
      240 T Butanon 2

   Fahrweise
      Vorlage auf Rückfluß (ca. 80°C) heizen, Zulauf 2 starten und in 5 Std. zudosieren, 15 Minuten nach Zulauf 2 - Beginn, Rest von
      Zulauf 2 starten und in 3,5 Std. zudosieren. Nach Zulaufende 2 Std. weiter bei Rückfluß halten, auf 60°C kühlen und
   128 T Glycidylmethacrylat
   3 T Triphenylphosphin
   zugeben und 2 Std. bei Rückfluß halten, dann auf 60°C kühlen und
   Zulauf 3
      65 T Dimenthylethanolamin
      1200 T Wasser
   in 30 Minuten einrühren. Es wird ein viskose, leicht trübe Lösung erhalten.
      pH-Wert 9,5
      Feststoffgehalt 33,8%
2. Herstellung eines UV-Pulverlack-Acrylatharzes
   400 T Isobutanol
   werden unter Stickstoff vorgelegt und auf Rückfluß erhitzt; unter Rühren werden dann bei ca. 105 bis 108°C innerhalb einer Stunde mit gleichbleibender Geschwindigkeit zugefahren eine Mischung von

   270 T Methymethacrylat
   300 T Dicyclopentadienolacrylat
   200 T Styrol
   50 T 2-Ethylhexylacrylat
   30 T Acrylsäure
   150 T Verbindung Formel I

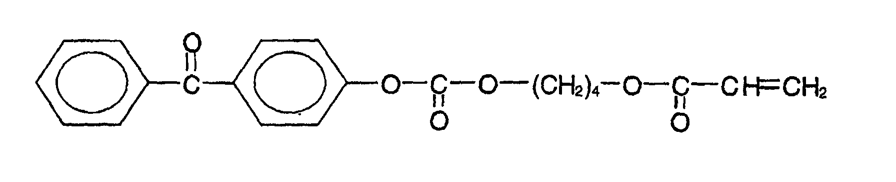

   30 T tert.-Butylperoctoat
   20 Minuten nach Zulaufende werden weiter
   20 T tert.-Butylperoctoat innerhalb 15 Minuten zugegeben und 3 Std. weiterpolymerisiert. Aus der viskosen Harzlösung wurde unter Vakuum dann der Hauptteil des Lösemittels bis auf eine Schmelztemperatur von 140°C abdestilliert. Die heiße Schmelze wurde in eine mit Aluminiumfolie ausgelegte Pozellanschale ausgegossen und im Vakuumschrank bei ca. 80°C 48 Std. getrocknet. Das reultierende spröde Harz wurde von den Folien abgeklopft und grob zerkleinert.
3. Herstellung des UV-Pulverlacks
   450 T Acrylatharz laut 2.
   1,0 T Tinuvin 144 (HALS)
   4,5 T Additol XL 490 (Verlaufsmittel) und
   1,5 T Benzoin (Entgasungsmittel)
   werden innig auf einem Henschel-Fluidmischer vermischt, auf einem BUSS PLK 46 Extruder extrudiert, auf einer Hosohawa Acm 2-Mühle vermahlen und über ein 125 µm Sieb abgesiebt.
4. Herstellung einer UV-Pulverlackdispersion
   500 T entsalztes Wasser
   0,6 T Troykyd D777 (Entschäumer)
   0,6 T Orotan 731 K (Dispergierhilfsmittel)
   0,2 T Surfinol TMN 6 (Netzmittel)
   100 T UV-covernetzbares Polyacrylatschutzkolloid laut 1.
   werden unter einem schneillaulenden Rührer vermischt, dann
   200 T des UV-Pulverlackes laut 3. eingerührt.
   Die erhaltene Dispersion wurde dann in einer Laborrührwerkskugelmühle solange gemahlen bis eine durchschnittliche Teilchengröße von 8 µm erreicht war. Danach wurde durch einen 50 µm Filter filtriert.
4. Applikation und Prüfung
   Die Dispersion laut 4. wurde mit einer Rakel mit Spalthöhe 80 µm auf entfettete Aluminiumbleche aufgezogen. Die Bleche wurden auf einer regelbaren Heizplatte gelegt, die unter einer UV-Quecksilberdampflampe mit einem Emissionsmaximum bei ca. 365 µm stand. Die Lampe war eingeschaltet, aber zunächst mit einem Abdeckschieber verschlossen. Die Temperatur der Heizplatte wurde von ca. 23 °C innerhalb von 20 Minuten auf 120°C gesteigert. Bei ca. 70°C wurde die zunächst milchig weiße Beschichtung klar und ging allmählich in eine Schmelze über. Bei 120 °C war eine glatt verlaufene Schmelze entstanden. Nun wurde der Verschlußschieber der UV-Lampe für 45 Sekunden geöffnet. Die Bleche wurden von der Heizplatte entfernt und abgekühlt. Es resultierten harte, glänzende Lackierungen die nach 50 Hüben mit einem mit Methylethylketon angefeuchteten Wattebausch keinen Angriff zeigten. Die Schichtdicke betrug 26 bis 34 µm.

## Patentansprüche

1. Wäßrige Dispersion enthaltend eine feste pulverförmige Komponente A als disperse Phase und eine wäßrige Komponente B als kontinuierliche Phase **dadurch gekennzeichnet, daß** die Komponente A einen UV-härtbaren Pulverlack und die Komponente B wenigstens ein nichtionisches Verdickungsmittel enthält.

2. Dispersion gemäß Anspruch 1 **dadurch gekennzeichnet, daß** die Komponente A mindestens ein UV-härtbares festes Bindemittel sowie ggf. Pigmente und/oder ggf. Farbstoffe enthält.

3. Dispersion nach einem der Ansprüche 1 oder 2 **dadurch gekennzeichnet, daß** in Komponente A und/oder Komponente B Fotoinitiatoren, vorzugsweise polymergebundene Photoinitiatoren und ggf. UV-Stabilisatoren enthalten sind.

4. Dispersion nach einem der Ansprüche 1 bis 3 **dadurch gekennzeichnet, daß** in Komponente A Mischungen von ungesättigten Polymeren und Polymeren mit einem Anteil an photochemisch anregbaren, copolymeren Fotoinitiatoren enthalten sind.

5. Dispersionen nach einem der Ansprüche 1 bis 4 **dadurch gekennzeichnet, daß** in Komponente A und/oder Komponente B Katalysatoren, Hilfsstoffe, UVpulverlacktypische Additive, wie Entgasungsmittel, Verlaufsmittel, UV-Absorber, Radikalfänger, Antioxidantien, Biozide, Lösemittel, Vemetzungsmittel, vorzugsweise geradkettige, aliphatische Dicarbonsäuren und/oder carboxyfunktionelle Polyester vorhanden sind.

6. Dispersion nach einem der Ansprüche 1 bis 5 **dadurch gekennzeichnet, daß** die Komponente B Dispersionshilfsmittel, vorzugsweise carboxyfunktionelle Dispergiermittel, Neutralisierungsmittel, vorzugsweise Amino- und/oder Wasserrückhaltemittel enthält.

7. Dispersion nach einem der Ansprüche 1 bis 6 **dadurch gekennzeichnet, daß** die Komponente B als nichtionischen Verdicker A mindestens einen nichtionischen Assoziativ-Vedicker enthält, der als Strukturmerkmale:
aa) ein hydrophiles Gerüst und
ab) hydrophobe Gruppen, die zu einer assoziativen Wechselwirkung im wäßrigen Medium fähig sind,
enthält.

8. Dispersion nach Anspruch 7 **dadurch gekennzeichnet, daß** der nichtionische Assoziativ-Verdicker a) als hydrophiles Gerüst aa) Polyurethanketten, vorzugsweise mit Polyetherbausteinen enthält.

9. Verfahren zur Herstellung der Dispersion nach einem der Ansprüche 1 bis 8
**dadurch gekennzeichnet, daß**
I. aus der festen, pulverförmigen Komponente A und der Komponente B eine Dispersion hergestellt wird und
II. die erhaltende Dispersion zur Herstellung einer optimalen Korngröße und Korngrößenverteilung vermahlen wird.
III. der pH-Wert eingestellt wird und
IV. filtriert wird.

10. Verwendung der Dispersion nach einem der Ansprüche 1 bis 8 zur Beschichtung von lackierten und nichtlackierten Substraten, inbesondere Automobilkarosserien aus Metall, Blech und/oder Kunsstoff.

## Claims

1. An aqueous dispersion comprising a solid pulverulent component A as disperse phase and an aqueous component B as continuous phase, wherein component A comprises a UV-curable powder coating material and component B comprises at least one nonionic thickener.

2. A dispersion as claimed in claim 1, wherein component A comprises at least one UV-curable solid binder and also, if desired, pigments and/or, if desired, dyes.

3. A dispersion as claimed in either of claims 1 and 2, wherein component A and/or component B comprise/comprises photoinitiators, preferably polymer-bonded photoinitiators and, if desired, UV stabilizers.

4. A dispersion as claimed in any of claims 1 to 3, wherein component A comprises mixtures of unsaturated polymers and polymers having a fraction of photochemically excitable, copolymeric photoinitiators.

5. A dispersion as claimed in any of claims 1 to 4, wherein component A and/or component B comprise/comprises catalysts, auxiliaries, additives typical for UV powder coating materials, such as devolatilizing agents, leveling agents, UV absorbers, free-radical scavengers, antioxidants, biocides, solvents, wetting agents, preferably straight-chain aliphatic dicarboxylic acids and/or carboxy-functional polyesters.

6. A dispersion as claimed in any of claims 1 to 5, wherein component B comprises dispersion auxiliaries, preferably carboxy-functional dispersants, neutralizing agents, preferably amines, and/or water retention agents.

7. A dispersion as claimed in any of claims 1 to 6, wherein component B comprises as nonionic thickener A at least one nonionic associative thickener whose structural features comprise
aa) a hydrophilic structure and
ab) hydrophobic groups capable of associative interaction in an aqueous medium.

8. A dispersion as claimed in claim 7, wherein the nonionic associative thickener a) comprises as the hydrophilic structure aa) polyurethane chains, preferably having polyether units.

9. A process for preparing a dispersion as claimed in any of claims 1 to 8, which comprises
I. preparing a dispersion from the solid pulverulent component A and the component B, and
II. grinding the resulting dispersion in order to produce an optimum particle size and particle size distribution;
III. adjusting the pH, and
IV. carrying out filtration.

10. The use of a dispersion as claimed in any of claims 1 to 8 for coating coated and uncoated substrates, especially auto bodies comprising metal, metal sheet and/or plastic.

## Revendications

1. Dispersion aqueuse contenant un composant A solide en forme de poudre comme phase dispersée et un composant B aqueux comme phase continue, **caractérisée en ce que** le composant A contient une laque en poudre durcissable aux UV et le composant B contient au moins un épaississant non ionique.

2. Dispersion selon la revendication 1, **caractérisée en ce que** le composant A contient au moins un liant solide durcissable aux UV ainsi que, le cas échéant, des pigments et/ou, le cas échéant, des colorants.

3. Dispersion selon l'une quelconque des revendications 1 ou 2, **caractérisée en ce que** dans le composant A et/ou le composant B, des photoamorceurs, de préférence des photoamorceurs liés à un polymère, et le cas échéant, des stabilisateurs UV sont contenus.

4. Dispersion selon l'une quelconque des revendications 1 à 3, **caractérisée en ce que** dans le composant A, des mélanges de polymères insaturés et de polymères avec une proportion de photoamorceurs copolymères, activables de façon photochimique, sont contenus.

5. Dispersions selon l'une quelconque des revendications 1 à 4, **caractérisées en ce que** dans le composant A et/ou le composant B, des catalyseurs, des adjuvants, des additifs typiques pour les laques en poudre UV, comme des agents de dégazage, des produits nivelants, des absorbants de rayons UV, des capteurs de radicaux libres, des antioxydants, des biocides, des solvants, des réticulants, de préférence des acides dicarboniques aliphatiques à chaîne linéaire et/ou des polyesters à fonction carboxy, sont présents.

6. Dispersion selon l'une quelconque des revendications 1 à 5, **caractérisée en ce que** le composant B contient des agents dispersants, de préférence des dispersants à fonction carboxy, des agents neutralisants, de préférence des agents de rétention des amines et/ou de rétention d'eau.

7. Dispersion selon l'une quelconque des revendications 1 à 6, **caractérisée en ce que** le composant B contient comme épaississant non ionique A au moins un épaississant associatif non ionique qui contient comme particularités structurelles :
aa) une structure hydrophile et
ab) des groupes hydrophobes capables d'une interaction associative dans un milieu aqueux.

8. Dispersion selon la revendication 7, **caractérisée en ce que** l'épaississant associatif non ionique contient a) comme structure hydrophile aa) des chaînes polyuréthane, de préférence avec des constituants polyéther.

9. Procédé de production de la dispersion selon l'une quelconque des revendications 1 à 8, **caractérisé en ce que**
I) à partir du composant A solide en forme de poudre et du composant B, une dispersion est produite, et
II) la dispersion obtenue est broyée pour obtenir une taille de grain et répartition de tailles de grain optimales,
III) la valeur de pH est ajustée, et
IV) un filtrage est effectué.

10. Utilisation de la dispersion selon l'une quelconque des revendications 1 à 8 pour le revêtement de substrats laqués et non laqués, en particulier de carrosseries automobiles en métal, en tôle et/ou en matière plastique.
